# EUROPEAN PATENT SPECIFICATION

(11) **EP 4 161 005 B1**
(45) Date of publication and mention of the grant of the patent: **18.11.2026**
(21) Application number: 21812777.7
(22) Date of filing: 13.05.2021
(51) Int. Cl.: H04L 45/24

(54) **ENTRY SYNCHRONIZATION METHOD, GATEWAY DEVICE, NETWORKING SYSTEM, AND STORAGE MEDIUM**
EINGABESYNCHRONISATIONSVERFAHREN, GATEWAY-VORRICHTUNG, VERNETZUNGSSYSTEM UND SPEICHERMEDIUM
PROCÉDÉ DE SYNCHRONISATION D'ENTRÉE, DISPOSITIF PASSERELLE, SYSTÈME DE MISE EN RÉSEAU ET SUPPORT DE STOCKAGE

(30) Priority: 29.05.2020 CN 202010478532
(43) Date of publication of application: 05.04.2023
(73) Proprietor: ZTE Corporation, Shenzhen, Guangdong 518057 (CN)
(72) Inventor: NIU, Huabin, Shenzhen, Guangdong 518057 (CN)
(74) Representative: Novagraaf Technologies
(86) International application number: PCT/CN2021/093684
(87) International publication number: WO 2021/238672

(56) References cited:
- CN-A- 108 173 691
- CN-A- 108 259 635
- CN-A- 109 462 515
- CN-A- 110 351 127
- CN-A- 110 351 127
- US-A1- 2020 036 577
- US-B1- 8 787 149

## Description

### Technical Field

The present disclosure relates to the technical field of communication, in particular to an entry synchronization method, a gateway device, a networking system and a storage medium.

### Background

Multi-Chassis Link Aggregation Group (MC-LAG) is a networking mechanism, which may perform link aggregation on one access device and the other two gateway devices operating MC-LAG apparatuses.

A synchronization link is arranged between the two gateway devices and commonly called as a peerlink, and the two gateway devices may synchronize, by the synchronization link, entries learnt at respective aggregation ports to peer ends, thereby achieving linkage in a forwarding level. Meanwhile, a consult link is further arranged between the two gateway devices, commonly called as keepalive link, and configured to perform consistency check on configurations of the two-end devices, and meanwhile consult out a master role and a standby role. Synchronization of an MC-LAG entry refers to a manner of trigger synchronization and periodic synchronization. When newly added, an entry will be immediately synchronized to a remote end. In addition, full-scale entry synchronization will be performed at a fixed time interval.

In a synchronization process, unsuccessful data transmitting or receiving and a problem of repeated data transmitting may be caused by a peer end being busy or some factors, and thus a problem of packet losses or more packets in multi-chassis link aggregation group networking needs to be solved.

The related document US 8 787 149 B1 discloses a mac address synchronization for multi-homing with multichassis link aggregation and the related document CN 110 351 127 A discloses a method, device and system for elegant restart.

### Summary

The present disclosure provides an entry synchronization method, a gateway device, a networking system and a storage medium, which can improve communication efficiency in multi-chassis link aggregation group networking.

In a first aspect, an embodiment of the present disclosure provides an entry synchronization method, including:
when a to-be-processed message transmitted from a peer end is received, determining a target entry stored at a local end and corresponding to the to-be-processed message and an SG port state of the peer end; and
sending a synchronization message about the target entry to the peer end according to the target entry stored at the local end and the SG port state of the peer end.

In a second aspect, an embodiment of the present disclosure further provides a gateway device including a memory and a processor. The memory is configured to store computer programs. The processor is configured to perform the computer programs and realizes the above entry synchronization method when performing the computer programs.

In a third aspect, an embodiment of the present disclosure further provides a networking system. The networking system includes two gateway modules configured to realize the above entry synchronization method.

In a fourth aspect, an embodiment of the present disclosure further provides a computer-readable storage medium storing computer programs. The processor realizes the above entry synchronization method when performing the computer programs.

The present disclosure discloses the entry synchronization method, the gateway device, the networking system and the storage medium. The method includes: when the to-be-processed message transmitted from the peer end is received, determining the target entry stored at the local end and corresponding to the to-be-processed message and the SG port state of the peer end; and sending the synchronization message about the target entry to the peer end according to the target entry stored at the local end and the SG port state of the peer end. When the to-be-processed message transmitted from the peer end is received, whether the operation of performing entry synchronization on the peer end needs to be performed or not is judged by determining the SG port state of the peer end and the target entry stored at the local end and corresponding to the to-be-processed message, thereby performing replenish synchronization on missing data in time after packet losses in a gateway device transmission process; and meanwhile, the scheme may solve a problem about multi-packet repeated sending after judging, according to a plurality of factors, to perform synchronization operation, thereby further improving communication efficiency in multi-chassis link aggregation group networking.

### Brief Description of the Drawings

In order to describe technical solutions in embodiments of the present disclosure more clearly, drawings required to be used for describing the embodiments will be simply introduced below, obviously, the drawings described below are some embodiments of the present disclosure, and other drawings can be further obtained by those ordinary persons skilled in the art according to the drawings without creative work.
Fig. 1 is a module schematic block diagram of a multi-chassis link aggregation group networking system according to an embodiment of the present disclosure;
Fig. 2 is a schematic flowchart of an entry synchronization method according to an embodiment of the present disclosure;
Fig. 3 is a schematic flowchart of another entry synchronization method according to an embodiment of the present disclosure;
Fig. 4 is a schematic flowchart of another entry synchronization method according to an embodiment of the present disclosure; and
Fig. 5 is a structural schematic block diagram of a gateway device according to an embodiment of the present disclosure.

### Detailed Description of the Embodiments

Technical solutions in embodiments of the present disclosure will be clearly and completely described below in combination with drawings in the embodiments of the present disclosure, and it is apparent that the described embodiments are merely a part rather than all of embodiments of the present disclosure. All other embodiments obtained by persons skilled in art without contributing creative work based on the embodiments of the present disclosure shall fall within the scope of protection of the present disclosure.

Flowcharts shown in the drawings are merely some examples, which do not necessarily include all contents and operation/steps and do not need to be performed according to a described sequence. For example, some operation/steps may also be disassembled, combined or partially combined, and thus a practical execution sequence may be changed according to practical situations.

It is to be understood that terms used in the Description of the present disclosure are merely used for describing purposes of specific embodiments rather than limit the present disclosure. Such as the terms used in the Description and Claims of the present disclosure, a singular form "one" and "the" intend to include a plural form except other situations clearly indicated by the context.

It is to be further understood that the term "and/or" used in the Description and Claims of the present disclosure refers to one or any combination of more of associated listed items and all possible combinations thereof, and these combinations are included.

The embodiment of the present disclosure provides an entry synchronization method, a gateway device, a networking system and a storage medium. Some implementation modes of the present disclosure are explained in detail by combining drawings below. The following embodiments and characteristics in the embodiments may be combined without conflicts.

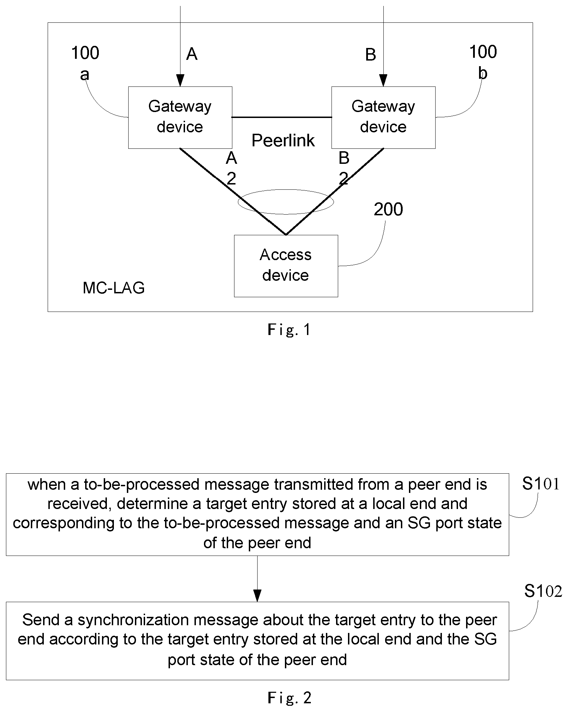

The entry synchronization method according to the embodiment of the present disclosure is applied to any gateway device in a Multi-Chassis Link Aggregation Group (MC-LAG) networking system. Fig. 1 is a module schematic block diagram of a multi-chassis link aggregation group networking system. The multi-chassis link aggregation group networking system includes an access device and two gateway devices.

Corresponding configurations may be performed between the two gateway devices so as to be paired, and after successful pairing, a master and standby state between the two gateway devices may be determined. A relationship between the master gateway device and the standby gateway device does not influence normal flow forwarding, and can act only when a line has a fault. After the master and the standby are determined, the two gateway devices may periodically send a heartbeat message through a network side link. When the two devices both receive messages sent by peer ends, an active-active system starts to normally work.

After normal working, the two devices may send a synchronization message through a peerlink to synchronize peer-end information in real time. The synchronization message includes an MAC entry, an Address Resolution Protocol (ARP) entry, etc., and thus any device with the fault will not influence forwarding of flow, which guarantees that normal business will not be interrupted.

Due to periodic synchronization being full-scale synchronization, a synchronization period cannot be set too short commonly. If a Central Processing Unit (CPU) of the gateway device at the peer end is busy during synchronization, or part of forwarded entries fail in being received or issued due to other factors, following problems may occur: (1) A message forwarded for searching for an MAC entry will be unnecessarily doubled to the gateway device at the peer end, while the access device serving as a receiving end finally receives the double messages. (2) For a message forwarded for searching for an ARP/ND entry, the gateway device at a local end without corresponding entries will trigger an ARP/NS request to the access device, the access device possibly returns an ARP/NA response to the gateway device at the peer end, and the gateway device at the local end cannot learn the ARP entry as well, which causes continuous flow packet losses.

For example, as shown in Fig. 1, a gateway device 100b in Fig. 1 receives an ARP/ND message from the access device 200 and generates a corresponding MAC table and a corresponding ARP/ND table at the local end. Since MC-LAG is configured in the gateway devices, the gateway device 100b will synchronize the MAC table and the ARP/ND table to a gateway device 100a. If the gateway device 100a does not receive a synchronization message due to some reasons at the time or does not perform processing after receiving due to a CPU being busy, which causes a corresponding MAC entry and a corresponding ARP/ND entry are not formed on the gateway device 100a.

For another example, when the gateway device 100a receives, from an uplink port, a layer-II message with a destination being the access device 200, the gateway device 100a without the MAC entry will broadcast the layer-II message to an A2 link and meanwhile broadcasts the layer-II message to the gateway device 100b through a peerlink, the gateway device 100b searches for the MAC table, which indicates that the layer-II message is a known unicast message, and will also forward the layer-II message to the access device 200, and as a result, the access device 200 receives the double messages.

For another example, when the gateway device 100a receives, from the uplink port, a layer-III message with a destination being the access device 200, the gateway device 100a without the ARP/ND entry will trigger and send an AR/NS request to the access device 200 according to the layer-III message. Assuming that the access device 200 returns an ARP/NA response message to a B2 link, the gateway device 100a still cannot generate the ARP/ND entry, and as a result, flow will be continuously discarded.

Referring to Fig. 2, Fig. 2 is a schematic flowchart of an entry synchronization method according to an embodiment of the present disclosure. As shown in Fig. 2, the entry synchronization method specifically includes steps S101-S102.

S101: When a to-be-processed message transmitted from a peer end is received, determine a target entry stored at a local end and corresponding to the to-be-processed message and an SG port state of the peer end.

Herein, the method may be applied to any gateway device in a multi-chassis link aggregation group networking system, and as shown in Fig. 1, may be applied to the gateway device 100a or the gateway device 100b. The to-be-processed message may be received, from the uplink port, by the gateway device, and as shown in Fig. 1, may be received, from the A link, by the gateway device 100a, or from the B link, by the gateway device 100b.

After receiving the to-be-processed message from the uplink port, the gateway device will send the to-be-processed message to the other gateway device possibly due to the gateway device going wrong or a normal transmission manner of the to-be-processed message. For example, if the gateway device 100a receives the to-be-processed message from the A link and then transmits the to-be-processed message to the gateway device 100b through the peerlink, the gateway device 100b serves as a local end, and the gateway device 100a serves as a peer end. If the gateway device 100b receives the to-be-processed message from the B link and then transmits the to-be-processed message to the gateway device 100a through the peerlink, the gateway device 100a serves as a local end, and the gateway device 100b serves as a peer end.

The to-be-processed message is commonly sent by the gateway device to a corresponding target device which may be the access device; and thus, the to-be-processed message may have corresponding transmission parameters through which an address of the target device corresponding to the to-be-processed message may be determined, and accordingly, the gateway device may send the to-be-processed message to the target device. The target entry is used for determining the address of the target device corresponding to the to-be-processed message, and includes the address of the target device. If the local end stores the target entry corresponding to the to-be-processed message, the address of the target device corresponding to the to-be-processed message may be determined from the target entry. The to-be-processed message may be the layer-II message, and a corresponding target entry may be a Media Access Control (MAC) entry.

An SG port is configured to be connected to the access device on the gateway device, and the SG port state is used for embodying whether a communication link between the gateway device and the access device is normal or not. For example, when the communication link between the gateway device and the access device is normal, the state of the SG port is "up", and when the communication link between the gateway device and the access device has a fault, the state of the SG port will be switched to "down". Whether the communication link of the gateway device goes wrong or not may be determined according to the SG port state.

S102: Send a synchronization message about the target entry to the peer end according to the target entry stored at the local end and the SG port state of the peer end.

Herein, whether the communication link between the gateway device and the access device is normal or not may be directly determined by the SG port state of the peer end. If the communication link between the gateway device at the peer end and the access device goes wrong, the gateway device at the peer end cannot issue the to-be-processed message to the access device through the SG port, and thus, the to-be-processed message needs to be sent to the gateway device at the local end to be issued by utilizing a multi-chassis link aggregation group networking function. Whether the gateway device at the peer end has missing target entries or not cannot be accurately determined due to the communication link of the gateway device at the peer end going wrong.

If the communication link between the gateway device at the peer end and the access device is alright, the gateway device at the peer end still sends the to-be-processed message to the gateway device at the local end, namely, the gateway device at the peer end has the normal communication link for issuing the to-be-processed message to the access device, but does not issue other information of the to-be-processed message locally, and thus, the gateway device at the peer end needs to utilize the multi-chassis link aggregation group networking function for issuing by the gateway device at the local end. The situation is possibly caused when the gateway device at the peer end does not store a target entry corresponding to the to-be-processed message, and the peer end has missing data possibly due to the CPU being busy in the previous communication process and other conditions.

Thus, the synchronization message about the target entry may be sent to the peer end according to the SG port state of the peer end and the target entry stored at the local end. The synchronization message carries the target entry corresponding to the to-be-processed message, the local end sends, by the synchronization message, the target entry corresponding to the to-be-processed message to the gateway device at the peer end, and accordingly, the gateway device at the peer end may replenish and store the target entry corresponding to the to-be-processed message.

In an embodiment, the operation of sending a synchronization message about a target entry to a peer end according to the target entry stored at a local end and an SG port state of the peer end may be implemented by a following manner:
the synchronization message about the target entry is sent to the peer end if the local end stores the target entry and the SG port state of the peer end is a target state.

Herein, the target state is used for indicating that a communication link corresponding to an SG port is normal, the SG port is used for connecting a gateway device to an access device, and thus, the target state is used for indicating that the communication link between the gateway device and the access device is normal. Optionally, the target state may be "up", the SG port state being "up" indicates that the communication link between the gateway device and the access device is normal.

The SG port state of the peer end being the target state indicates that a gateway device at the peer end does not store a target entry corresponding to a to-be-processed message while a gateway device at a local end stores the target entry corresponding to the to-be-processed message, and thus, the gateway device at the local end may initiate the synchronization message about the target entry to the gateway device at the peer end, and accordingly, the gateway device at the peer end may replenish and store the target entry corresponding to the to-be-processed message.

According to the entry synchronization method according to the embodiment of the present disclosure, when the to-be-processed message transmitted from the peer end is received, whether the operation of performing entry synchronization on the peer end needs to be performed or not is judged by determining the SG port state of the peer end and the target entry stored at the local end and corresponding to the to-be-processed message, thereby performing replenish synchronization on missing data in time after packet losses in a gateway device transmission process; and meanwhile, the scheme may solve a problem about multi-packet repeated sending after judging, according to a plurality of factors, to perform synchronization operation.

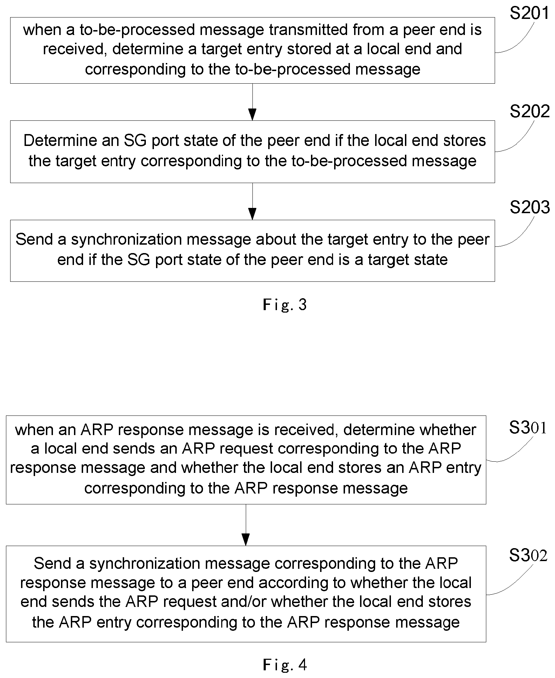

As shown in Fig. 3, a method of an embodiment of the present disclosure may be implemented according to following steps:
S201: When a to-be-processed message transmitted from a peer end is received, determine a target entry stored at a local end and corresponding to the to-be-processed message.
S202: Determine an SG port state of the peer end if the local end stores the target entry corresponding to the to-be-processed message.
S203: Send a synchronization message about the target entry to the peer end if the SG port state of the peer end is a target state.

Herein, whether the local end stores the target entry corresponding to the to-be-processed message or not may be firstly determined when the to-be-processed message transmitted from the peer end is received. If it is determined that the local end stores the target entry corresponding to the to-be-processed message, it indicates that the local end is capable of performing the operation of sending the synchronization message about the target entry to the peer end. Then, whether the SG port state of the peer end is the target state or not is judged, and if the SG port state of the peer end is the target state, the synchronization message about the target entry is sent to the peer end.

In an embodiment, the method further includes following operation: send a to-be-processed message according to a multi-chassis link aggregation group transmission rule if a local end does not store a target entry corresponding to the to-be-processed message or the local end stores the target entry and an SG port state of the peer end is not a target state.

Herein, if the local end does not store the target entry corresponding to the to-be-processed message, the to-be-processed message may be sent according to the multi-chassis link aggregation group transmission rule and may be sent to a downstream device. The multi-chassis link aggregation group transmission rule may be preset in a multi-chassis link aggregation group networking system, and exemplarily, may be sent to device members in a one-way loop in the multi-chassis link aggregation group networking system instead of device members in a two-way loop in a local multi-chassis link aggregation group networking system.

The local end stores the target entry and the SG port state of the peer end is not the target state, which indicate that a communication link of a gateway device at the peer end has a fault, the gateway device at the peer end may possibly store the target entry corresponding to the to-be-processed message, a gateway device at the local end receiving the to-be-processed message belongs to normal message forwarding in the multi-chassis link aggregation group networking system, and thus, the to-be-processed message may be sent according to the multi-chassis link aggregation group transmission rule.

In an embodiment, the method further includes following operation:
a changed SG port state is sent to a peer end if the SG port state of a local end changes; and
the SG port state sent by the peer end is stored into SG state information when the SG port state sent by the peer end is received.

Correspondingly, the operation of determining the SG port state of the peer end may be implemented by a following manner:
a newest SG port state in the SG state information is determined as the SG port state of the peer end.

Herein, a gateway device may continuously detect a state of a self SG port, and may send the changed SG port state to the peer end when detecting that the SG port state of the local end changes. Exemplarily, the SG port state of the local end is originally "up"but changed into "down" due to a fault of a communication link, and at the time, the changed SG port state "down" may be sent to a gateway device at the peer end.

Correspondingly, the gateway device at the local end receives the SG port state sent by the peer end, which indicates that the SG port state of the gateway device at the peer end changes, and accordingly, the SG port state sent by the peer end is stored and may be stored in the SG state information of the local end. The SG state information stores a historical SG port state of the gateway device at the peer end. When the gateway device at the local end needs to determine the SG port state of the peer end, the SG port state of the peer end at the time may be determined according to the newest port state in the SG state information.

In an embodiment, the operation of determining an SG port state of a peer end may be implemented by a following manner:
a state inquiry message is sent to a peer end and receive an SG port state returned by the peer end.

Herein, a gateway device at a local end may actively inquire the SG port state of the peer end besides passively receiving the SG port state sent by the peer end, which avoids the situation that after the previous SG port state of the peer end changes, a message about the sent changed SG port state gets lost, and consequently, the gateway device at the local end does not receive a newest SG port state of the peer end. The state inquiry message may be sent to the peer end, and after receiving the state inquiry message, the peer end may return the current SG port state to the local end.

In an embodiment, the operation of sending a synchronization message about a target entry to a peer end may be implemented by a following manner:
the synchronization message about the target entry is sent to the peer end, and send the synchronization message about the target entry to the peer end again according to a preset synchronization rule in case of receiving a to-be-processed message transmitted from the peer end and corresponding to the target entry.

Herein, after the synchronization message about the target entry is sent to the peer end, if in a normal state, the peer end will add the target entry according to the synchronization message, and if in a busy state, the peer end cannot add the corresponding target entry according to the synchronization message. At the time, the peer end still has a to-be-processed message corresponding to the target entry but not sent by the peer end, the peer end will continue to send the to-be-processed message corresponding to the target entry to a local end, and thus, after the synchronization message about the target entry to the peer end, receiving the to-be-processed message transmitted from the peer end and corresponding to the target entry indicates that the peer end fails in adding the target entry, and the local end needs to send the synchronization message about the target entry to the peer end again.

To avoid increasing a busy degree of a CPU at the peer end, the synchronization message about the target entry may be sent to the peer end again at a certain time interval. The synchronization message about the target entry may be sent to the peer end again according to the preset synchronization rule, and the preset synchronization rule may be preset and include a sending time interval and/or a sending frequency.

In an embodiment, as shown in Fig. 4, the method further includes following operation:
S301: When an ARP response message is received, determine whether a local end sends an ARP request corresponding to the ARP response message or not and whether the local end stores an ARP entry corresponding to the ARP response message or not.
S302: Send a synchronization message corresponding to the ARP response message to a peer end according to whether the local end sends the ARP request or not and/or whether the local end stores the ARP entry corresponding to the ARP response message or not.

Herein, the ARP response message is returned according to the ARP request, and includes the ARP entry corresponding to the ARP request. For example, when a gateway device receives, from an uplink port, data of an access device with an Internet Protocol (IP) address being a first address, the gateway device does not store a corresponding ARP/ND entry locally, and at the time, the gateway device may trigger an ARP/NS request.

The ARP response message may be a layer-III message received by the gateway device from the uplink port and having a target device being the access device. Exemplarily, as shown in Fig. 1, the gateway device 100a may receive the ARP response message from the A link. The ARP response message may be received from the access device. Exemplarily, as shown in Fig. 1, the gateway device 100a may receive the ARP response message from the A2 link.

Whether the received ARP response message corresponds to a gateway device at the peer end or not may be determined by determining whether the local end sends the ARP request corresponding to the ARP response message, thereby determining whether synchronous operation corresponding to the ARP response message needs to be performed on the peer end or not. Meanwhile, a gateway device at the local end may perform corresponding operation according to the ARP response message, and thus types of operation corresponding to the ARP response message and correspondingly performed at the local end are different according to whether the local end stores the ARP entry corresponding to the ARP response message or not.

Accordingly, whether the local end sends the ARP request corresponding to the ARP response message or not and whether the local end stores the ARP entry corresponding to the ARP response message or not may be determined, and the synchronization message corresponding to the ARP response message is sent to peer end according to whether the local end sends the ARP request or not and/or whether the local end stores the ARP entry corresponding to the ARP response message or not.

Exemplarily, if the gateway device at the local end stores the ARP/ND entry, the local end does not initiate an ARP/NS request but receives the ARP response message, for a gateway address, replied by the access device, it may indicate that a peer-end device does not have the ARP/ND entry, the ARP/NS request is initiated by the peer end, and thus, after receiving the ARP response message, the local end may initiate a synchronization message about the ARP/ND entry to the peer-end device. If an ARP/NA response message replied by the access device is directly sent to the peer-end gateway device sending the ARP/NS request, the peer-end gateway device may normally generate an MAC entry and an ARP/ND entry directly according to the ARP/NA response message.

In an embodiment, the operation of sending a synchronization message corresponding to an ARP response message to a peer end according to whether a local end sends an ARP request or not and/or whether the local end stores an ARP entry corresponding to the ARP response message or not may be implemented by a following manner:
the ARP entry is added at the local end according to the ARP response message and the synchronization message corresponding to the ARP response message is sent to the peer end if the local end does not have the ARP entry corresponding to the ARP response message;
the ARP entry is updated at the local end according to the ARP response message if the local end sends the ARP request corresponding to the ARP response message and stores the ARP entry corresponding to the ARP response message; and
the synchronization message corresponding to the ARP response message is sent to the peer end if the local end does not send the ARP request corresponding to the ARP response message and stores the ARP entry corresponding to the ARP response message.

Herein, if the local end does not have the ARP entry corresponding to the ARP response message, the local end may add the ARP entry at the local end according to the ARP response message regardless of the ARP request being sent by the local end or the peer end, and meanwhile the synchronization message corresponding to the ARP response message may be sent to the peer end.

If the local end stores the ARP entry corresponding to the ARP response message and sends the ARP request corresponding to the ARP response message, the ARP response message of the local end directly corresponds to the ARP request sent by the local end. The ARP request sent by the local end is used for triggering a keepalive message before aging of the ARP/ND entry and normally updating aging time of the ARP/ND entry, and thus the ARP entry at the local end may be updated according to the ARP response message.

If the local end stores the ARP entry corresponding to the ARP response message and does not send the ARP request corresponding to the ARP response message, it indicates that the ARP request is sent by the peer-end device. But the local end also stores the ARP entry corresponding to the ARP response message, it indicates that the gateway device at the peer end possibly has a problem of data losses in a previous synchronization process and does not store the corresponding ARP entry, and at the time, the gateway device at the local end may send the synchronization message corresponding to the ARP response message to the peer end according to the ARP response message.

It needs to be explained that actually, the ARP/NS request may also be sent to the gateway device at the local end through a peerlink when initiated at the peer end. If the gateway device at the local end sends the synchronization message about the ARP entry to the peer end according to the ARP/NS request and meanwhile the ARP/NA response message is replied to the peer-end device, peer-end entry coverage between a local state and a synchronization state will be caused, and consequently, an additional processing process is added. According to the embodiment of the present disclosure, when the ARP response message is received, the synchronization message corresponding to the ARP response message is sent to the peer end according to whether the local end sends the ARP request or not and/or whether the local end stores the ARP entry corresponding to the ARP response message or not, thereby avoiding the problem about coverage and meanwhile updating synchronization about the ARP entry between the two gateway devices in time.

In an embodiment, a gateway device according to the embodiment of the present disclosure includes a configuration module, a port module, a database module, a message receiving and sending module, a message processing module and an MC-LAG system module which are mutually connected.

The configuration module is configured to replenish a synchronization message for a newly-added entry. If a CPU at a peer end is busy for a long time, the load of the CPU is increased due to frequent message synchronization. The configuration module is configured to enable a user to manually configure a replenish synchronization interval and a synchronization frequency and form a preset synchronization rule. When the peer end is in a busy state, a synchronization message about a target entry is sent to the peer end again according to the preset synchronization rule.

The port module is configured to rapidly inform the MC-LAG system module to modify an SG port state carried by a keepalive message of the MC-LAG system module when the SG port state changes so that the peer end can correctly record an SG port state of a local end according to the received keepalive message.

For the normal keepalive message, the MC-LAG system module may also dynamically acquire the SG port state from the port module. A state error caused by missing of a message reported by the port module may be corrected in the following keepalive message.

The database module is configured to record the peer-end SG port state acquired from the keepalive message into SG state information at the local end, and whether operation of replenish synchronization needs to be performed or not is determined according to the peer-end SG port state being a judgment condition in the SG state information.

The message receiving and sending module is configured to achieve receiving and sending of the keepalive message in the multi-chassis link aggregation group networking system, and fields of the SG port state of the local end are added in the keepalive message.

The CPU processes receiving and sending of a protocol message. The fields of the SG port state are filled according to a state reported by the port module last time, active inquiry may be performed as well, and a problem of the state error caused by missing of data reported after the SG port state changes is solved. When the port module actively reports the changed SG port state, a keepalive message carrying fields of the changed SG port state needs to be immediately triggered and sent to the peer end.

In addition, the message receiving and sending module may further include recognition of a message received from the peerlink, and the message being known unicast or unknown unicast needs to be judged by the MC-LAG system module.

In addition, the message receiving and sending module may further include recognition of a message received from an MC-LAG link. When an ARP/NS response is received, whether the ARP/NS request has been sent before or not, it is still need to inform the MC-LAG system module to judge.

The message processing module is configured to record fields of the peer-end SG port state according to the received keepalive message. The fields of the peer-end SG port state need to provide an inquiry manner visible to users.

The MC-LAG system module serving as a leading module of the whole gateway device is configured to collect all necessary information and make corresponding decisions.

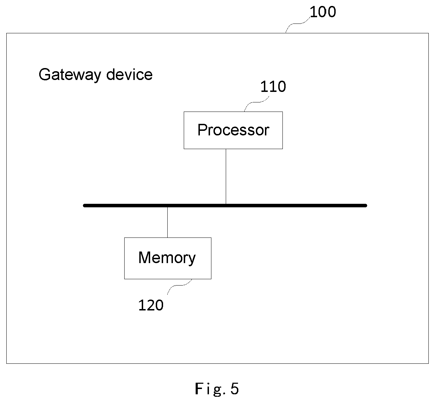

Referring to Fig. 5, Fig. 5 is a structural schematic block diagram of a gateway device according to an embodiment of the present disclosure. The gateway device may be a switch or a router.

Referring to Fig. 5, the gateway device 100 includes a processor 110 and a memory 120 which are connected through a system bus. The memory 120 may include a nonvolatile storage medium and an internal memory.

The nonvolatile storage medium may store an operating system and computer programs. The computer programs include program instructions. When the program instructions are performed, the processor may perform any entry synchronization method.

The processor is configured to provide calculation and control capability, which supports running of the whole gateway device.

The internal memory provides an environment for the computer programs in the nonvolatile storage medium to run. When the computer programs are performed by the processor, the processor may perform any entry synchronization method.
the skilled person in the art need to understand that the structure shown in Fig. 5 is merely a block diagram of part of structures associated with a disclosed scheme but does not constitute limitations on the gateway device to which the disclosed scheme is applied. The specific gateway device may include more or less components than components shown in the drawing, or some combined components or different arranged components.

It is to be understood that the processor may be a Central Processing Unit (CPU) and may also be other universal processors, a Digital Signal Processor (DSP), an Application Specific Integrated Circuit (ASIC), a Field-Programmable Gate Array (FPGA) or other programmable logic devices, discrete gate or transistor logic devices, discrete hardware assembles, etc. Where, the universal processor may be a microprocessor or the processor, and may also be any conventional processor, etc.

In an embodiment, a processor is configured to run computer programs stored in a memory so as to achieve following steps:
when a to-be-processed message transmitted from a peer end is received, determine a target entry stored at a local end and corresponding to the to-be-processed message and an SG port state of the peer end; and
a synchronization message about the target entry is sent to the peer end according to the target entry stored at the local end and the SG port state of the peer end.

In an embodiment, a processor achieves sending a synchronization message about a target entry to a peer end according to a target entry stored at a local end and an SG port state of the peer end for realizing:
the synchronization message about the target entry is sent to the peer end if the local end stores the target entry and the SG port state of the peer end is a target state, where the target state is used for indicating that a communication link corresponding to an SG port is normal.

In an embodiment, a processor is further configured to:
send a changed SG port state to a peer end if the SG port state of a local end changes; and
store the SG port state sent by the peer end into SG state information when the SG port state sent by the peer end is received.

The processor determining the SG port state of the peer end aims to realize:
determining a newest SG port state in the SG state information as the SG port state of the peer end.

In an embodiment, a processor determining an SG port state of a peer end aims to realize:
sending a state inquiry message to the peer end and receiving an SG port state returned by the peer end.

In an embodiment, a processor achieves sending a synchronization message about a target entry to a peer end aims to realize:
sending the synchronization message about the target entry to the peer end; and
sending the synchronization message about the target entry to the peer end again according to a preset synchronization rule in case of receiving a to-be-processed message transmitted from the peer end and corresponding to the target entry.

In an embodiment, a preset synchronization rule includes a sending time interval and/or a sending frequency.

In an embodiment, a processor is further configured to:
send a to-be-processed message according to a multi-chassis link aggregation group transmission rule if a local end does not store a target entry corresponding to the to-be-processed message or the local end stores the target entry and an SG port state of a peer end is not a target state.

In an embodiment, a processor is further configured to:
when an ARP response message is received, determine whether a local end sends an ARP request corresponding to the ARP response message or not and whether the local end stores an ARP entry corresponding to the ARP response message or not; and
send a synchronization message corresponding to the ARP response message to a peer end according to whether the local end sends the ARP request or not and/or whether the local end stores the ARP entry corresponding to the ARP response message or not.

In an embodiment, a processor achieves sending a synchronization message corresponding to an ARP response message to a peer end according to whether a local end sends an ARP request or not and/or whether the local end stores an ARP entry corresponding to the ARP response message or not aims to realize:
add the ARP entry at the local end according to the ARP response message and send the synchronization message corresponding to the ARP response message to the peer end if the local end does not have the ARP entry corresponding to the ARP response message;
update the ARP entry at the local end according to the ARP response message if the local end sends the ARP request corresponding to the ARP response message and stores the ARP entry corresponding to the ARP response message; and
send the synchronization message corresponding to the ARP response message to the peer end if the local end does not send the ARP request corresponding to the ARP response message and stores the ARP entry corresponding to the ARP response message.

The embodiment of the present disclosure further provides a networking system. The networking system includes two gateway modules. The gateway modules are configured to realize any entry synchronization method according to embodiments of the present disclosure.

The embodiment of the present disclosure further provides a computer-readable storage medium storing computer programs. The computer programs include program instructions. A processor performs the program instructions to realize any entry synchronization method according to embodiments of the present disclosure.

Where, the computer-readable storage medium may be an internal memory unit of a gateway device according to the above embodiment, such as a hard disk or an internal memory of the gateway device. The computer-readable storage medium may also be an external memory device of the gateway device, such as a plug-in type hard disk, a Smart Media Card (SMC), a Secure Digital (SD) card and a Flash Card arranged on the gateway device.

## Claims

1. An entry synchronization method, applied to any gateway device in a multi-chassis link aggregation group networking system, **characterized by** comprising:
when a to-be-processed message transmitted from a peer end is received, determining (S101) a target entry stored at a local end and corresponding to the to-be-processed message, and determining an SG port state of the peer end; and
sending (S102) a synchronization message about the target entry to the peer end according to the target entry stored at the local end and the SG port state of the peer end.

2. The entry synchronization method according to claim 1, wherein sending a synchronization message about the target entry to the peer end according to the target entry stored at the local end and the SG port state of the peer end comprises:
sending the synchronization message about the target entry to the peer end in a case that the local end stores the target entry and the SG port state of the peer end is a target state, the target state being used for indicating that a communication link corresponding to an SG port is normal.

3. The entry synchronization method according to claim 1, further comprising:
sending a changed SG port state to the peer end in a case that the SG port state of the local end changes; and
storing the SG port state sent from the peer end into SG state information in a case that the SG port state sent from the peer end is received,
wherein determining the SG port state of the peer end comprises:
determining a newest SG port state in the SG state information as the SG port state of the peer end.

4. The entry synchronization method according to claim 1, wherein determining an SG port state of the peer end comprises:
sending a state inquiry message to the peer end and receiving the SG port state returned by the peer end.

5. The entry synchronization method according to claim 1, wherein sending a synchronization message about the target entry to the peer end comprises:
sending the synchronization message about the target entry to the peer end; and
sending the synchronization message about the target entry to the peer end again according to a preset synchronization rule in case of receiving a to-be-processed message transmitted from the peer end and corresponding to the target entry.

6. The entry synchronization method according to claim 5, wherein, the preset synchronization rule comprises one of the followings:
a sending time interval;
a sending frequency;
a sending time interval and a sending frequency.

7. The entry synchronization method according to claim 1, further comprising:
sending the to-be-processed message according to a multi-chassis link aggregation group transmission rule in a case that the local end does not store the target entry corresponding to the to-be-processed message or the local end stores the target entry and the SG port state of the peer end is not a target state.

8. The entry synchronization method according to any one of claims 1 to 7, further comprising:
when an Address Resolution Protocol, ARP, response message is received, determining (S301) whether a local end sends an ARP request corresponding to the ARP response message or not and whether the local end stores an ARP entry corresponding to the ARP response message or not; and
sending (S302) a synchronization message corresponding to the ARP response message to a peer end according to one of the followings:
whether the local end sends the ARP request;
whether the local end stores the ARP entry corresponding to the ARP response message;
whether the local end sends the ARP request and whether the local end stores the ARP entry corresponding to the ARP response message.

9. The entry synchronization method according to claim 8, wherein,
sending a synchronization message corresponding to the ARP response message to a peer end according to whether the local end stores the ARP entry corresponding to the ARP response message or not comprises: adding the ARP entry at the local end according to the ARP response message and sending the synchronization message corresponding to the ARP response message to the peer end in a case that the local end does not have the ARP entry corresponding to the ARP response message;
sending a synchronization message corresponding to the ARP response message to a peer end according to whether the local end sends the ARP request and whether the local end stores the ARP entry corresponding to the ARP response message comprises: updating the ARP entry at the local end according to the ARP response message in a case that the local end sends the ARP request corresponding to the ARP response message and stores the ARP entry corresponding to the ARP response message; and sending the synchronization message corresponding to the ARP response message to the peer end in a case that the local end does not send the ARP request corresponding to the ARP response message and stores the ARP entry corresponding to the ARP response message.

10. A gateway device, **characterized by** comprising a memory (110) and a processor (120),
the memory (110) being configured to store a computer program; and
the processor (120) being configured to perform the computer program and implement the entry synchronization method according to any one of claims 1 to 9 during performing the computer program.

11. A networking system, **characterized by** comprising two gateway modules, the gateway modules being configured to realize the entry synchronization method according to any one of claims 1 to 9.

12. A computer-readable storage medium, **characterized in that** the computer-readable storage medium stores a computer program, and a processor implements the entry synchronization method according to any one of claims 1 to 9 when the computer program is executed by the processor.

## Patentansprüche

1. Eintragssynchronisationsverfahren, das auf eine beliebige Gateway-Vorrichtung in einem Multi-Chassis-Verbindungs-Aggregationsgruppen-Netzwerksystem angewendet wird, **gekennzeichnet dadurch dass** es umfasst:
wenn eine zu verarbeitende Nachricht, die von einem Peer-Ende gesendet wird, empfangen wird, Bestimmen (S101) eines Zieleintrags, der an einem lokalen Ende gespeichert ist und der zu verarbeitenden Nachricht entspricht, und Bestimmen eines SG-Port-Zustands des Peer-Endes; und
Senden (S102) einer Synchronisationsnachricht über den Zieleintrag an das Peer-Ende gemäß dem Zieleintrag, der an dem lokalen Ende gespeichert ist, und dem SG-Port-Zustand des Peer-Endes.

2. Eintragssynchronisationsverfahren nach Anspruch 1, wobei das Senden einer Synchronisationsnachricht über den Zieleintrag an das Peer-Ende gemäß dem Zieleintrag, der an dem lokalen Ende gespeichert ist, und dem SG-Port-Status des Peer-Endes umfasst:
Senden der Synchronisationsnachricht über den Zieleintrag an das Peer-Ende in einem Fall, in dem das lokale Ende den Zieleintrag speichert und der SG-Port-Zustand des Peer-Endes ein Zielzustand ist, wobei der Zielzustand zum Anzeigen verwendet wird, dass eine Kommunikationsverbindung, die einem SG-Port entspricht, normal ist.

3. Eintragssynchronisationsverfahren nach Anspruch 1, ferner umfassend:
Senden eines geänderten SG-Port-Status an das Peer-Ende in einem Fall, in dem sich der SG-Port-Status des lokalen Endes ändert; und
Speichern des SG-Port-Status, der von dem Peer-Ende gesendet wird, in SG-Statusinformationen in einem Fall, in dem der SG-Port-Status, der von dem Peer-Ende gesendet wird, empfangen wird,
wobei das Bestimmen des SG-Port-Zustands des Peer-Endes umfasst:
Bestimmen eines neuesten SG-Port-Status in den SG-Statusinformationen als den SG-Port-Status des Peer-Endes.

4. Eintragssynchronisationsverfahren nach Anspruch 1, wobei das Bestimmen eines SG-Port-Zustands des Peer-Endes umfasst:
Senden einer Zustandsabfragenachricht an das Peer-Ende und Empfangen des SG-Port-Zustands, der durch den Peer-Ende zurückgegeben wird.

5. Eintragssynchronisationsverfahren nach Anspruch 1, wobei das Senden einer Synchronisationsnachricht über den Zieleintrag an das Peer-Ende umfasst:
Senden der Synchronisationsnachricht über den Zieleintrag an das Peer-Ende; und
erneutes Senden der Synchronisationsnachricht über den Zieleintrag an das Peer-Ende gemäß einer voreingestellten Synchronisationsregel im Falle des Empfangens einer zu verarbeitenden Nachricht, die von dem Peer-Ende übertragen wird und dem Zieleintrag entspricht.

6. Eintragssynchronisationsverfahren nach Anspruch 5, wobei die voreingestellte Synchronisationsregel eines der Folgenden umfasst:
ein Sendezeitintervall;
eine Sendefrequenz;
ein Sendezeitintervall und eine Sendefrequenz.

7. Eintragssynchronisationsverfahren nach Anspruch 1, ferner umfassend:
Senden der zu verarbeitenden Nachricht gemäß einer Multi-Chassis-Verbindungs-Aggregationsgruppe-Übertragungsregel in einem Fall, in dem das lokale Ende den Zieleintrag, der der zu verarbeitenden Nachricht entspricht, nicht speichert, oder das lokale Ende den Zieleintrag speichert und der SG-Port-Zustand des Peer-Endes kein Zielzustand ist.

8. Eintragssynchronisationsverfahren nach einem der Ansprüche 1 bis 7, ferner umfassend:
wenn eine Address-Resolution-Protocol, ARP-Antwortnachricht, empfangen wird, Bestimmen (S301), ob ein lokales Ende eine ARP-Anforderung, die der ARP-Antwortnachricht entspricht, sendet oder nicht und ob das lokale Ende einen ARP-Eintrag, der der ARP-Antwortnachricht entspricht, speichert oder nicht; und
Senden (S302) einer Synchronisationsnachricht, die der ARP-Antwortnachricht entspricht, an ein Peer-End gemäß einem der Folgenden:
ob das lokale Ende die ARP-Anforderung sendet;
ob das lokale Ende den ARP-Eintrag, der der ARP-Antwortnachricht entspricht, speichert;
ob das lokale Ende die ARP-Anfrage sendet und ob das lokale Ende den ARP-Eintrag, der der ARP-Antwortnachricht entspricht, speichert.

9. Eintragssynchronisationsverfahren nach Anspruch 8, wobei,
das Senden einer Synchronisationsnachricht, die der ARP-Antwortnachricht entspricht, an ein Peer-Ende, in Abhängigkeit davon, ob das lokale Ende den ARP-Eintrag, der der ARP-Antwortnachricht entspricht, speichert oder nicht, umfasst: Hinzufügen des ARP-Eintrags an dem lokalen Ende gemäß der ARP-Antwortnachricht und Senden der Synchronisationsnachricht, die der ARP-Antwortnachricht entspricht, an das Peer-Ende in einem Fall, in dem das lokale Ende den ARP-Eintrag, der der ARP-Antwortnachricht entspricht, nicht aufweist;
das Senden einer Synchronisationsnachricht, die der ARP-Antwortnachricht entspricht, an ein Peer-Ende in Abhängigkeit davon, ob das lokale Ende die ARP-Anforderung sendet und ob das lokale Ende den ARP-Eintrag, der der ARP-Antwortnachricht entspricht, speichert, umfasst: Aktualisieren des ARP-Eintrags an dem lokalen Ende gemäß der ARP-Antwortnachricht in einem Fall, in dem das lokale Ende die ARP-Anforderung, die der ARP-Antwortnachricht entspricht, sendet und den ARP-Eintrag, der der ARP-Antwortnachricht entspricht, speichert; und Senden der Synchronisationsnachricht, die der ARP-Antwortnachricht entspricht, an das Peer-Ende in einem Fall, in dem das lokale Ende die ARP-Anforderung, die der ARP-Antwortnachricht entspricht, nicht sendet und den ARP-Eintrag, der der ARP-Antwortnachricht entspricht, speichert.

10. Gateway-Vorrichtung, **gekennzeichnet dadurch, dass** sie einen Speicher (110) und einen Prozessor (120) umfasst,
der Speicher (110) konfiguriert ist, um ein Computerprogramm zu speichern; und
wobei der Prozessor (120) konfiguriert ist, um das Computerprogramm durchzuführen und das Eintragssynchronisationsverfahren nach einem der Ansprüche 1 bis 9 während des Durchführens des Computerprogramms zu implementieren.

11. Netzwerksystem, **gekennzeichnet dadurch, dass** es zwei Gateway-Module umfasst, wobei die Gateway-Module konfiguriert sind, um das Eintragssynchronisationsverfahren nach einem der Ansprüche 1 bis 9 zu realisieren.

12. Computerlesbares Speicherungsmedium,
**dadurch gekennzeichnet, dass** das computerlesbare Speicherungsmedium ein Computerprogramm speichert und ein Prozessor das Eintragssynchronisationsverfahren nach einem der Ansprüche 1 bis 9 implementiert, wenn das Computerprogramm durch den Prozessor ausgeführt wird.

## Revendications

1. Procédé de synchronisation d'entrée, appliqué à un quelconque dispositif passerelle dans un système de mise en réseau de groupe d'agrégation de liens multi-châssis, **caractérisé en ce qu'**il comprend :
lorsqu'un message à traiter transmis depuis une extrémité homologue est reçu, la détermination (S101) d'une entrée cible stockée au niveau d'une extrémité locale et correspondant au message à traiter, et la détermination d'un état de port SG de l'extrémité homologue ; et
l'envoi (S102) d'un message de synchronisation concernant l'entrée cible à l'extrémité homologue selon l'entrée cible stockée au niveau de l'extrémité locale et l'état de port SG de l'extrémité homologue.

2. Procédé de synchronisation d'entrée selon la revendication 1, dans lequel l'envoi d'un message de synchronisation concernant l'entrée cible à l'extrémité homologue selon l'entrée cible stockée au niveau de l'extrémité locale et l'état de port SG de l'extrémité homologue comprend :
l'envoi du message de synchronisation concernant l'entrée cible à l'extrémité homologue dans un cas où l'extrémité locale stocke l'entrée cible et où l'état de port SG de l'extrémité homologue est un état cible, l'état cible étant utilisé pour indiquer qu'une liaison de communication correspondant à un port SG est normale.

3. Procédé de synchronisation d'entrée selon la revendication 1, comprenant en outre :
l'envoi d'un état de port SG modifié à l'extrémité homologue dans un cas où l'état de port SG de l'extrémité locale est modifié ; et
le stockage de l'état de port SG envoyé depuis l'extrémité homologue dans des informations d'état SG dans un cas où l'état de port SG envoyé depuis l'extrémité homologue est reçu,
dans lequel la détermination de l'état de port SG de l'extrémité homologue comprend :
la détermination d'un état de port SG le plus récent dans les informations d'état SG en tant qu'état de port SG de l'extrémité homologue.

4. Procédé de synchronisation d'entrée selon la revendication 1, dans lequel la détermination d'un état de port SG de l'extrémité homologue comprend :
l'envoi d'un message d'interrogation d'état à l'extrémité homologue et la réception de l'état de port SG renvoyé par l'extrémité homologue.

5. Procédé de synchronisation d'entrée selon la revendication 1, dans lequel l'envoi d'un message de synchronisation concernant l'entrée cible à l'extrémité homologue comprend :
l'envoi du message de synchronisation concernant l'entrée cible à l'extrémité homologue ; et
le renvoi du message de synchronisation concernant l'entrée cible à l'extrémité homologue selon une règle de synchronisation prédéfinie en cas de réception d'un message à traiter transmis depuis l'extrémité homologue et correspondant à l'entrée cible.

6. Procédé de synchronisation d'entrée selon la revendication 5, dans lequel la règle de synchronisation prédéfinie comprend l'un parmi ce qui suit :
un intervalle de temps d'envoi ;
une fréquence d'envoi ;
un intervalle de temps d'envoi et une fréquence d'envoi.

7. Procédé de synchronisation d'entrée selon la revendication 1, comprenant en outre :
l'envoi du message à traiter selon une règle de transmission de groupe d'agrégation de liens multi-châssis dans un cas où l'extrémité locale ne stocke pas l'entrée cible correspondant au message à traiter ou où l'extrémité locale stocke l'entrée cible et l'état de port SG de l'extrémité homologue n'est pas un état cible.

8. Procédé de synchronisation d'entrée selon l'une quelconque des revendications 1 à 7, comprenant en outre :
lorsqu'un message de réponse de protocole de résolution d'adresse, ARP, est reçu, le fait de déterminer (S301) si une extrémité locale envoie une demande ARP correspondant au message de réponse ARP ou non et si l'extrémité locale stocke une entrée ARP correspondant au message de réponse ARP ou non ; et
l'envoi (S302) d'un message de synchronisation correspondant au message de réponse ARP à une extrémité homologue selon l'un parmi ce qui suit :
si l'extrémité locale envoie la demande ARP ;
si l'extrémité locale stocke l'entrée ARP correspondant au message de réponse ARP ;
si l'extrémité locale envoie la demande ARP et si l'extrémité locale stocke l'entrée ARP correspondant au message de réponse ARP.

9. Procédé de synchronisation d'entrée selon la revendication 8, dans lequel,
l'envoi d'un message de synchronisation correspondant au message de réponse ARP à une extrémité homologue selon que l'extrémité locale stocke ou non l'entrée ARP correspondant au message de réponse ARP comprend : l'ajout de l'entrée ARP au niveau de l'extrémité locale selon le message de réponse ARP et l'envoi du message de synchronisation correspondant au message de réponse ARP à l'extrémité homologue dans un cas où l'extrémité locale ne possède pas l'entrée ARP correspondant au message de réponse ARP ;
l'envoi d'un message de synchronisation correspondant au message de réponse ARP à une extrémité homologue selon que l'extrémité locale envoie la demande ARP et que l'extrémité locale stocke l'entrée ARP correspondant au message de réponse ARP comprend : la mise à jour de l'entrée ARP au niveau de l'extrémité locale selon le message de réponse ARP dans un cas où l'extrémité locale envoie la demande ARP correspondant au message de réponse ARP et stocke l'entrée ARP correspondant au message de réponse ARP ; et l'envoi du message de synchronisation correspondant au message de réponse ARP à l'extrémité homologue dans un cas où l'extrémité locale n'envoie pas la demande ARP correspondant au message de réponse ARP et stocke l'entrée ARP correspondant au message de réponse ARP.

10. Dispositif de passerelle, **caractérisé par le fait qu'**il comprend une mémoire (110) et un processeur (120),
la mémoire (110) est configurée pour stocker un programme informatique ; et
le processeur (120) étant configuré pour réaliser le programme informatique et mettre en œuvre le procédé de synchronisation d'entrée selon l'une quelconque des revendications 1 à 9 lors de la réalisation du programme informatique.

11. Système de mise en réseau, **caractérisé par le fait qu'**il comprend deux modules de passerelle, les modules de passerelle étant configurés pour effectuer le procédé de synchronisation d'entrée selon l'une quelconque des revendications 1 à 9.

12. Support de stockage lisible par ordinateur, **caractérisé en ce que** le support de stockage lisible par ordinateur stocke un programme informatique, et un processeur met en œuvre le procédé de synchronisation d'entrée selon l'une quelconque des revendications 1 à 9 lorsque le programme informatique est exécuté par le processeur.
